# EUROPEAN PATENT APPLICATION

(11) **EP 4 822 754 A1**
(43) Date of publication of application: **14.10.2026**
(21) Application number: 24896668.1
(22) Date of filing: 28.11.2024
(51) Int. Cl.: H01M 4/13, H01M 4/139, H01M 10/42, H01M 4/04

(54) **ELECTRODE SHEET AND PREPARATION METHOD THEREFOR, ELECTRODE ASSEMBLY, AND LITHIUM ION BATTERY**

(30) Priority: 30.11.2023 CN 202311623117
(71) Applicant: Trina Storage Solutions (Jiangsu) Co., Ltd, Changzhou, Jiangsu 213031 (CN)
(72) Inventor: GAO, Jifan, hangzhou, Jiangsu 213031 (CN); WEI, Siwei, hangzhou, Jiangsu 213031 (CN); JIANG, Zhiyi, hangzhou, Jiangsu 213031 (CN); JIAO, Yanxia, hangzhou, Jiangsu 213031 (CN); YANG, Fan, hangzhou, Jiangsu 213031 (CN); CHEN, Gaojian, hangzhou, Jiangsu 213031 (CN)
(74) Representative: Arnold & Siedsma
(86) International application number: PCT/CN2024/135373
(87) International publication number: WO 2025/113583

(57) **Abstract**

An electrode sheet, an electrode assembly, and a lithium ion battery. The electrode sheet (1) includes a conductive current collector (10), an electrode active layer (20), and an adhesion-enhancing layer (30), wherein the electrode active layer (20) covers a middle region of the conductive current collector (10) in a first direction, and the adhesion-enhancing layer (30) covers at least part of a surface of the electrode active layer (20) facing away from the conductive current collector (10).

## Description

### RELATED APPLICATIONS

The present application claims priority to Chinese Patent Application No. 2023116231170, filed on November 30, 2023 and entitled "ELECTRODE SHEET AND PREPARATION METHOD THEREFOR, ELECTRODE ASSEMBLY, AND LITHIUM ION BATTERY", the content of which is hereby incorporated by reference in its entirety.

### TECHNICAL FIELD

The present application relates to the technical field of lithium-ion batteries, and in particular, to an electrode sheet, a preparation method therefor, an electrode assembly, and a lithium-ion battery.

### BACKGROUND

With the rapid development of the field of energy storage technology, the market side places increasingly higher demands on the performance of lithium-ion batteries in all aspects, and the pressure on the cost side is also increasing. The improvement of a separator has a significant effect on reducing costs. If a dry-process coated separator is adopted, the unit price of the separator can be reduced by 60% or above, which in return reduces the corresponding cell cost per Wh by approximately 10%. Therefore, the use of the foregoing separator in the lithium-ion batteries can help to significantly reduce production costs.

However, the use of the dry-process coated separator causes the removal of a coating from the separator, which leads to extremely severe cases such as electrode sheet wrinkling for a winding structure or poor electrode sheet coverage for a lamination structure of an electrode assembly, leading to great safety risks. Therefore, it is necessary to further improve the production process of the lithium-ion batteries, so that the foregoing separator can be smoothly introduced into a device without safety risks, and the product competitiveness can be enhanced.

### SUMMARY

An embodiment of the present application provides an electrode sheet, including a conductive current collector, an electrode active layer, and an adhesion-enhancing layer. The electrode active layer covers a middle region of the conductive current collector in a first direction, and the adhesion-enhancing layer covers at least part of a surface of the electrode active layer facing away from the conductive current collector.

In an embodiment, the adhesion-enhancing layer covers the surface of the electrode active layer facing away from the conductive current collector, the adhesion-enhancing layer includes an adhesion-enhancing strip, and the number of the adhesion-enhancing strips satisfies n ≥ 1.

In an embodiment, the adhesion-enhancing strip is rectangular.

In an embodiment, the number of the adhesion-enhancing strips satisfies n > 1, and the adhesion-enhancing strips are spaced apart from each other in the same direction.

A width direction of each of the adhesion-enhancing strips is parallel to the first direction; or
a length direction of each of the adhesion-enhancing strips is parallel to the first direction.

In an embodiment, the number of the adhesion-enhancing strips satisfies n > 1, the adhesion-enhancing strips are arranged in a grid pattern, a width direction of at least one adhesion-enhancing strip is parallel to the first direction, and a length direction of other adhesion-enhancing strips is parallel to the first direction.

In an embodiment, a thickness of the electrode active layer is set as T1, a thickness of the adhesion-enhancing layer on the surface of the electrode active layer facing away from the conductive current collector is set as T2, where T2 < T1.

In an embodiment, 0 µm < T2 ≤ 10 µm.

In an embodiment, in a region corresponding to the conductive current collector, the adhesion-enhancing layer further covers at least a side surface of the electrode active layer perpendicular to the conductive current collector.

In an embodiment, the thickness of the electrode active layer is set as T1, a thickness of the adhesion-enhancing layer covering the side surface is set as T3, where T3 ≤ (T1+10) µm; and
a width of the adhesion-enhancing layer covering the side surface in a direction perpendicular to the first direction is set as W1, where 0 mm ≤ W1 ≤ 15 mm.

In an embodiment, a projection area of the adhesion-enhancing layer on the conductive current collector accounts for 5% to 110% of a projection area of the electrode active layer on the conductive current collector.

In an embodiment, a material of the adhesion-enhancing layer includes one or more of an active material, a binder, a conductive agent, or a dispersant.

In an embodiment, the material of the adhesion-enhancing layer is selected from the binder and the conductive agent.

In an embodiment, a mass ratio of the binder to the conductive agent is (10 to 50): (10 to 90).

An embodiment of the present application provides a method for preparing the electrode sheet according to any one of the foregoing embodiments, including the following steps:
coating to form an electrode active layer in a first direction on a middle region of a conductive current collector; and
coating to form an adhesion-enhancing layer on at least part of a surface of the electrode active layer facing away from the conductive current collector.

An embodiment of the present application provides an electrode assembly, including a cathode electrode sheet, an anode electrode sheet, and a separator. The cathode electrode sheet and the anode electrode sheet are separated by the separator, and at least one of the cathode electrode sheet or the anode electrode sheet is the electrode sheet in any one of the foregoing embodiments.

An embodiment of the present application provides a lithium-ion battery, including the electrode assembly in any one of the foregoing embodiments.

In addition to the conductive current collector and the electrode active layer, the electrode sheet further includes the adhesion-enhancing layer, the adhesion-enhancing layer covers at least part of the surface of the electrode active layer facing away from the conductive current collector, thereby increasing an adhesion effect between the electrode sheet and the separator, especially between the electrode sheet and the uncoated separator, solving a problem of wrinkling occurring when the electrode assembly with the uncoated separator is wound or a problem of poor coverage occurring during lamination, and thus prolonging the service life of the electrode assembly and reducing safety risks. The use of the foregoing electrode sheet more readily facilitates the introduction of the uncoated separator, which is beneficial to reducing production costs of the lithium-ion battery.

### BRIEF DESCRIPTION OF THE DRAWINGS

In order to illustrate the technical solutions of the embodiments of the present application or in conventional technologies more clearly, the drawings used in the embodiments or the conventional technologies will be described briefly. Apparently, the following described drawings are merely for the embodiments of the present application, and other drawings can be derived by those of ordinary skill in the art based on the disclosed drawings without any creative effort.
FIG. 1 is a schematic front view of an electrode sheet where the number of adhesion-enhancing strips satisfies n=1 according to an embodiment.
FIG. 2 is a schematic top view of an electrode sheet where the number of adhesion-enhancing strips satisfies n=1 according to an embodiment.
FIG. 3 is a schematic top view of an electrode sheet where the number of adhesion-enhancing strips satisfies n > 1 and a width direction of each of the adhesion-enhancing strips is parallel to a first direction according to an embodiment.
FIG. 4 is a schematic left view of an electrode sheet where the number of adhesion-enhancing strips satisfies n > 1 and a width direction of each of the adhesion-enhancing strips is parallel to a first direction according to an embodiment.
FIG. 5 is a schematic top view of an electrode sheet where the number of adhesion-enhancing strips satisfies n > 1 and a length direction of each of the adhesion-enhancing strips is parallel to a first direction according to another embodiment.
FIG. 6 is a schematic front view of an electrode sheet where the number of adhesion-enhancing strips satisfies n > 1 and a length direction of each of the adhesion-enhancing strips is parallel to a first direction according to another embodiment.
FIG. 7 is a schematic top view of an electrode sheet where the number of adhesion-enhancing strips satisfies n > 1 and the adhesion-enhancing strips are arranged in a grid pattern according to an embodiment.
FIG. 8 is a schematic front view of an electrode sheet where an adhesion-enhancing layer further covers at least a side surface of an electrode active layer perpendicular to a conductive current collector in a region corresponding to the conductive current collector according to an embodiment.
FIG. 9 is a partially enlarged schematic view of FIG. 8.

Description of Reference Numerals:
1: electrode sheet; 10: conductive current collector; 20: electrode active layer; 30: adhesion-enhancing layer; 310: adhesion-enhancing strip.

### DETAILED DESCRIPTION

The technical solutions in embodiments of the present application will now be clearly described in detail with reference to the drawings in the embodiments of the present application. Apparently, the described embodiments are only a part of the embodiments of the present application rather than all the embodiments. All other embodiments obtained by those of ordinary skill in the art based on the embodiments in the present application without any creative effort are within the scope of protection of the present application.

In the description of the present application, it should be understood that the orientation or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial direction", "radial direction", "circumferential direction", etc. indicate the orientations or positional relationships on the basis of the drawings. These terms are only for the convenience of describing the present application and simplifying the description, rather than indicating or implying that the related devices or element must have the specific orientations, or be constructed or operated in the specific orientations, and therefore cannot be understood as limitations of the present application.

In addition, the terms "first" and "second" are only used for descriptive purposes and cannot be understood as indicating or implying relative importance or implicitly indicating the quantity of the indicated technical features. Therefore, the features modified by "first" or "second" can explicitly or implicitly include at least one of the features. In the description of the present application, the "plurality" means at least two, such as two, three, etc., unless otherwise specifically defined.

In the present application, unless otherwise clearly specified and defined, the terms "installed", "connected", "coupled", "fixed" and the like should be understood broadly. For example, an element, when being referred to as being "installed", "connected", "coupled", or "fixed" to another element, unless otherwise specifically defined, can be fixedly connected, detachably connected, or integrated to the other element, can be mechanical connected or electrically connected to the other element, and can be directly connected to the other element, or connected to the other element via an intermediate medium, or can be internal communication between two elements or interaction between two elements. For those skilled in the art, the specific meanings of the above terms in the embodiments of the present application can be understood according to specific circumstances.

It should be noted that an element, when being referred to as being "fixed" or "mounted" to another element, can be directly fixed or mounted to the other element or via an intermediate element. An element, when being referred to as being "connected" to another element, can be directly connected to the other element or via an intermediate element.

In the present application, unless otherwise specifically defined, a first feature, when being referred to as being located "on" or "under" a second feature, can be in direct contact with the second feature or in indirect contact with the second feature via an intermediate medium. Moreover, a first feature, when being referred to as being located "on", "above", "over" a second feature, can be located right above or obliquely above the second feature, or merely located at a horizontal level higher than the second feature. A first feature, when being referred to as being located "under", "below", "beneath" a second feature, can be located right below or obliquely below the second feature, or merely located at a horizontal level lower than the second feature.

In addition, the drawings are not drawn to a scale of 1:1, and relative dimensions of each element in the drawings are only drawn by way of example to facilitate the understanding of the present application, and are not necessarily drawn according to an actual scale. The scale in the drawings does not constitute a limitation on the present application.

Unless otherwise defined, all technical and scientific terms used herein have the same meaning as commonly understood by those skilled in the art to which the present application belongs. The terms used herein in the specification of the present application are used only for the purpose of describing embodiments and are not intended to limit the present application. The term "and/or" used in the specification includes any and all combinations of one or more associated listed items.

The present application provides an electrode sheet, a preparation method therefor, an electrode assembly, and a lithium-ion battery. The electrode sheet is used to mitigate a problem of wrinkling of a wound electrode group or poor coverage of a laminated electrode group, more readily facilitate the introduction of an uncoated separator, and reduce production costs of the lithium-ion battery.

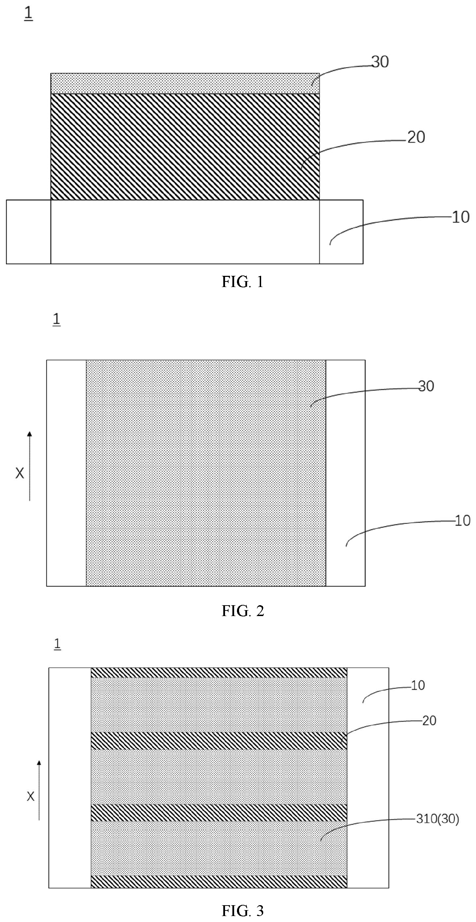

As shown in FIG. 1 to FIG. 8, an embodiment of the present application provides an electrode sheet 1, including a conductive current collector 10, an electrode active layer 20, and an adhesion-enhancing layer 30, wherein the electrode active layer 20 covers a middle region of the conductive current collector 10 in a first direction X, and the adhesion-enhancing layer 30 covers at least part of a surface of the electrode active layer 20 facing away from the conductive current collector 10.

In addition to the conductive current collector 10 and the electrode active layer 20, the electrode sheet 1 further includes the adhesion-enhancing layer 30, and the adhesion-enhancing layer 30 covers at least part of the surface of the electrode active layer 20 facing away from the conductive current collector 10, thereby increasing an adhesion effect between the electrode sheet 1 and the separator, especially between the electrode sheet 1 and the uncoated separator, solving the problem of wrinkling occurring when the electrode assembly with the uncoated separator is wound or the problem of poor coverage occurring during lamination, and thus prolonging the service life of the electrode assembly and reducing safety risks. The use of the electrode sheet 1 more readily facilitates the introduction of the uncoated separator, which is beneficial to reducing the production costs of the lithium-ion battery.

As shown in FIG. 1 to FIG. 6, the adhesion-enhancing layer covers the surface of the electrode active layer 20 facing away from the conductive current collector 10, the adhesion-enhancing layer 30 includes an adhesion-enhancing strip 310, and the number of the adhesion-enhancing strips 310 satisfies n ≥ 1. The adhesion-enhancing strip 310 is rectangular.

As shown in FIG. 1 and FIG. 2, in an embodiment, the number of adhesion-enhancing strips 310 satisfies n=1, and the adhesion-enhancing layer 30 covers the entire surface of the electrode active layer 20 facing away from the conductive current collector 10.

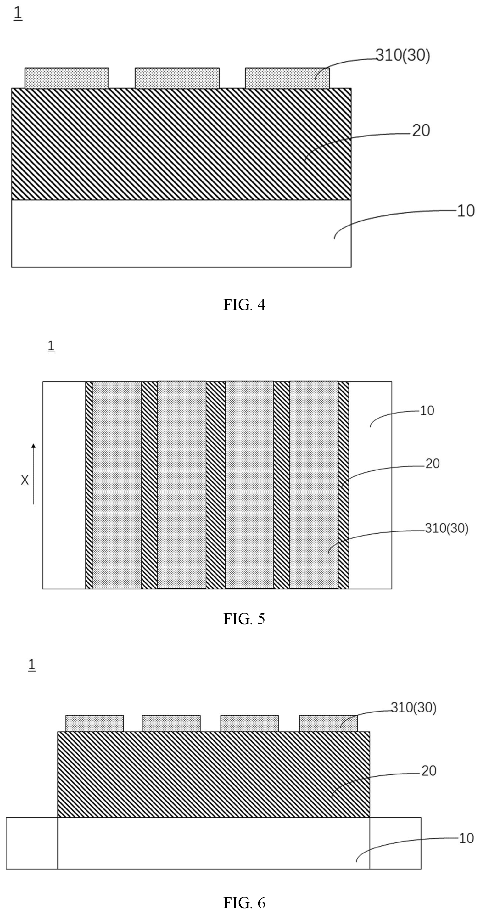

Referring to FIG. 3 to FIG. 6, in an embodiment, the number of adhesion-enhancing strips satisfies n > 1, and the adhesion-enhancing strips 310 are spaced apart from each other in the same direction. Further, referring to FIG. 3 and FIG. 4, a width direction of each of the adhesion-enhancing strips 310 is parallel to the first direction X. Alternatively, referring to FIG. 5 and FIG. 6, a length direction of each of the adhesion-enhancing strips 310 is parallel to the first direction X.

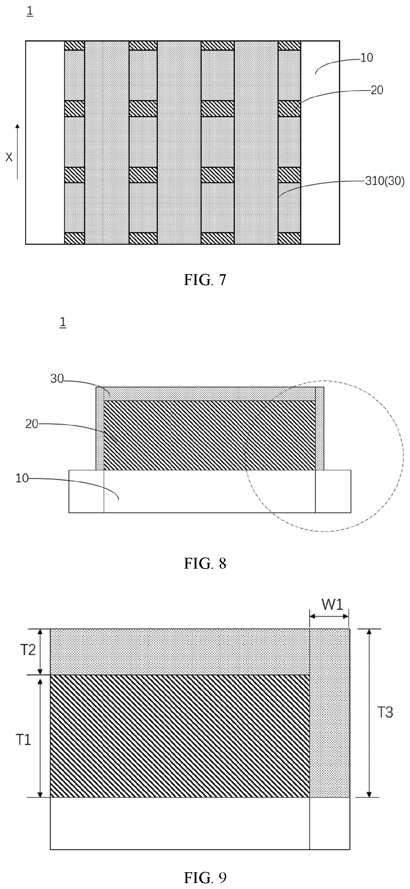

Referring to FIG. 7, in an embodiment, the number of adhesion-enhancing strips satisfies n > 1, the adhesion-enhancing strips 310 are arranged in a grid pattern, the width direction of at least one adhesion-enhancing strip 310 is parallel to the first direction X, and the length direction of other adhesion-enhancing strips 310 is parallel to the first direction X.

It can be understood that the adhesion-enhancing layer 30 only needs to cover a part of the surface of the electrode active layer 20 facing away from the conductive current collector 10. The adhesion-enhancing layer 30 can cover the entire surface, or cover a part of the surface, or cover beyond the surface of the electrode active layer 20 facing away from the conductive current collector 10. The shape and arrangement method of the adhesion-enhancing layer 30 are not limited to the technical solution in any one of the foregoing embodiments, and any other shape and arrangement method, such as irregular coverage, or discontinuous coverage, etc., can be adopted, as long as an adhesion-enhancing effect can be achieved, all of which shall all be construed as falling within the protection scope of the present application. It can be understood that the adhesion-enhancing layer 30 can cover the surface of the electrode active layer 20 by, for example, but not limited to, gravure coating, spray coating, intermittent coating, or other methods, as long as the effect of fixing the adhesion-enhancing layer 30 can be achieved.

Referring to FIG. 8, in an embodiment, in a region corresponding to the conductive current collector 10, the adhesion-enhancing layer 30 further covers at least a side surface of the electrode active layer 20 perpendicular to the conductive current collector 10.

Referring to FIG. 9, furthermore, a thickness of the electrode active layer 20 is set as T1, a thickness of the adhesion-enhancing layer 30 on the surface of the electrode active layer 20 facing away from the conductive current collector 10 is set as T2, where T2 < T1. The thickness T2 of the adhesion-enhancing layer 30 is less than the thickness T1 of the electrode active layer 20, which is beneficial to ensuring excellent electrical performance of the electrode sheet 1. Further, 0 µm<T2 ≤ 10 µm. Within this range, the thickness T2 of the adhesion-enhancing layer 30 can not only ensure a good adhesion effect, but also ensure that deintercalated ions can pass through the coating normally, without affecting the electrical performance. In an embodiment, 0.5 µm ≤ T2 ≤ 5 µm.

Referring to FIG. 9, furthermore, the thickness of the electrode active layer 20 is set as T1, the thickness of the adhesion-enhancing layer 30 covering the side surface is set as T3, where T3 ≤ (T1+10) µm. Controlling the thickness of the adhesion-enhancing layer 30 covering the side surface not to excessively exceed the thickness range of the electrode active layer 20 has little impact on the electrical performance of the electrode sheet 1. In an embodiment, T1-5 µm ≤ T3 ≤ T1+5 µm.

It can be understood that the thickness T1 of the electrode active layer 20 can be a conventional thickness of the electrode active layer in a lithium battery. T1 can be, for example, in a range from 60 µm to 100 µm.

Referring to FIG. 9, furthermore, a width of the adhesion-enhancing layer 30 covering the side surface in a direction perpendicular to the first direction X is set as W1, where 0 mm ≤ W1 ≤ 15 mm. Similarly, the width of the adhesion-enhancing layer 30 covering the side surface in the direction perpendicular to the first direction X falling within this range can avoid a problem of poor welding, and can effectively avoid a decrease in energy density. In an embodiment, 0.5 mm ≤ W1 ≤ 7 mm.

In an embodiment, a projection area of the adhesion-enhancing layer 30 on the conductive current collector 10 accounts for 5% to 110% of a projection area of the electrode active layer 20 on the conductive current collector 10. The projection area of the adhesion-enhancing layer 30 on the conductive current collector 10 within the foregoing range can effectively improve the adhesion effect between the electrode sheet 1 and the separator, especially between the electrode sheet 1 and the uncoated separator, thereby mitigating the problem of wrinkling or poor coverage of the electrode assembly.

In some embodiments, a material of the adhesion-enhancing layer 30 includes one or more of an active material, a binder, a dispersant, or a conductive agent. Further, the adhesion-enhancing layer 30 includes the active material, the binder, the dispersant, and the conductive agent at a mass ratio of (0 to 90) :(5 to 90) :(0.1 to 2) :(5 to 90). It can be understood that if the electrode sheet 1 is an anode electrode sheet, the active material is selected from anode active materials, and if the electrode sheet 1 is a cathode electrode sheet, the active material is selected from cathode active materials. Further, the material of the adhesion-enhancing layer 30 is selected from the binder and the conductive agent. Still further, a mass ratio of the binder to the conductive agent is (10 to 50): (10 to 90). An increased proportion of the conductive agent improves electrical conductivity, which is beneficial to improving cycle performance of the battery. However, with the increase of the proportion of the conductive agent, the proportion of the binder decreases. If the proportion of the binder is excessively low, the adhesive force decreases to an unreasonable level. A suitable adhesive force is beneficial to improving the adhesion effect between the electrode sheet and the separator, mitigating the problem of wrinkling, and preventing a problem of cycling lithium plating caused by wrinkling, and thus improving the cycle performance. If the adhesive force is excessively low, the electrical conductivity and the adhesive force are seriously unbalanced, which instead leads to a decrease in battery performance. Controlling the mass ratio of the binder to the conductive agent in the adhesion-enhancing layer 30 within the foregoing range can keep the electrical conductivity and the adhesive force of the electrode sheet in a good balance state.

Further, for example, the conductive agent can be, but is not limited to, carbon black.

Further, for example, the binder can be, but is not limited to, styrene-butadiene rubber.

An embodiment of the present application provides an electrode assembly, including a cathode electrode sheet, an anode electrode sheet, and a separator. The cathode electrode sheet and the anode electrode sheet are separated by the separator, and at least one of the cathode electrode sheet or the anode electrode sheet is the electrode sheet 1 in any one of the foregoing embodiments.

It can be understood that in some embodiments, the cathode electrode sheet can be the electrode sheet 1 in any one of the foregoing embodiments, and the anode electrode sheet can be a conventional anode electrode sheet. In some other embodiments, the anode electrode sheet can alternatively be the electrode sheet 1 in any one of the foregoing embodiments, and the cathode electrode sheet can be a conventional cathode electrode sheet. In still other embodiments, both the cathode electrode sheet and the anode electrode sheet can alternatively be the electrode sheet 1 in any one of the foregoing embodiments. It can be understood that for the cathode electrode sheet, the conductive current collector 10 can be a conventional cathode conductive current collector, and the electrode active layer 20 can be a conventional cathode electrode active layer. For the anode electrode sheet, the conductive current collector 10 can be a conventional anode conductive current collector, and the electrode active layer 20 can be a conventional anode electrode active layer.

In some embodiments, the electrode sheet 1 provided in any one of the foregoing embodiments is an anode electrode sheet, and the anode electrode active layer includes an anode active material. Further, the anode active material includes one or a combination of materials selected from artificial graphite, natural graphite, mesocarbon microbeads, composite graphite, hard carbon, soft carbon, silicon carbon materials, silicon oxide materials, silicon-based alloy materials, lithium titanate, or other non-carbon materials. Further, the anode electrode active layer further includes a binder, a dispersant, and a conductive agent. Further, the anode electrode active layer includes the anode active material, the binder, the dispersant, and the conductive agent at a mass ratio of (90 to 99) :(1 to 5) :(0.1 to 2) :(1 to 5). In an embodiment, the anode electrode active layer includes the anode active material, the binder, the dispersant, and the conductive agent at a mass ratio of (95 to 97) :(2 to 3) :(0.1 to 0.5) :(1 to 2).

In some embodiments, the electrode sheet 1 provided in any one of the foregoing embodiments is an anode electrode sheet, and the anode conductive current collector includes a copper foil.

It can be understood that when the electrode sheet 1 provided in any one of the foregoing embodiments is a cathode electrode sheet, the cathode electrode active layer also includes the active material, the binder, the conductive agent, etc. For example, the active material can include, but is not limited to, one or a combination of materials selected from lithium iron phosphate, lithium cobalt oxide, and lithium manganate. It can be understood that a cathode electrode current collector can be an aluminum foil.

In some embodiments, the separator can be one or more of PP, PE, a PP/PE/PP composite film, aramid, or non-woven fabric.

In some embodiments, the electrode assembly further includes an encapsulation layer that encapsulates the cathode electrode sheet, the anode electrode sheet, and the separator therein. Further, the encapsulation layer can be, for example, an aluminum-plastic film, an aluminum shell, a steel shell, or other material, and a shell shape of the encapsulation layer can be, for example, a cylinder, a polygonal prism, or the like.

An embodiment of the present application provides a lithium-ion battery, including the electrode assembly in any one of the foregoing embodiments.

Specific embodiments are shown as follows.

### Example 1

Step 1: Prepare an anode electrode sheet with reference to FIG. 5 and FIG. 6:
(1) After graphite, carbon black, and sodium carboxymethyl cellulose are dry-mixed at a mass ratio of 95.9%: 1.1%: 1.1%, deionized water is added for stirring, followed by addition of styrene-butadiene rubber with a mass ratio of 1.9% for uniform dispersion to obtain a slurry for an anode electrode active layer. The slurry for the anode electrode active layer is evenly coated in the first direction X on a middle region of the copper foil serving as the conductive current collector 10, and dried to form the electrode active layer 20. The thickness of the electrode active layer satisfies T1=80 µm.
(2) After carbon black and styrene-butadiene rubber are dry-mixed at a mass ratio of 4:1, deionized water is added and stirred to obtain a slurry for an adhesion-enhancing layer. The slurry for the adhesion-enhancing layer is uniformly coated on a part of the surface of the electrode active layer 20 facing away from the conductive current collector 10. Through intermittent coating, four rectangular adhesion-enhancing strips 310 arranged at intervals are formed. The length direction of each of the adhesion-enhancing strips 310 is parallel to the first direction X, and the adhesion-enhancing layer 30 is formed after drying. The thickness of the adhesion-enhancing layer 30 on the surface of the electrode active layer 20 facing away from the conductive current collector 10 satisfies T2=1.5 µm.
   The projection area of the adhesion-enhancing layer 30 on the conductive current collector 10 accounts for 60% of the projection area of the electrode active layer 20 on the conductive current collector 10.
(3) Perform cold pressing, die cutting, and slitting to obtain the anode electrode sheets.

### Step 2: Prepare a cathode electrode sheet:

After lithium iron phosphate, carbon black, and polyvinylidene fluoride are dry-mixed at a mass ratio of 96.5%: 1.5%: 2%, N-methylpyrrolidone as a solvent is added, followed by uniform stirring using a mixer to obtain a slurry for a cathode active layer. The slurry for the cathode active layer is uniformly coated on the aluminum foil, followed by drying, cold pressing, die cutting, and slitting to obtain the cathode electrode sheets.

### Step 3: Prepare a lithium-ion battery:

The anode electrode sheet prepared in Step 1, the cathode electrode sheet prepared in Step 2, and a separator made of a PP substrate are combined and wound to obtain a bare cell. Next, the bare cell is subjected to processes of conventional assembly, electrolyte injection, formation process, capacity grading, etc. to obtain the lithium-ion battery.

### Example 2

This example is substantially the same as that of Example 1, with a difference in that: in the anode electrode sheet of Example 2, a mass ratio of carbon black to styrene-butadiene rubber in the material of the adhesion-enhancing layer 30 is 1:1.

### Example 3

This example is substantially the same as that of Example 1, with a difference in that: in the anode electrode sheet of Example 3, a mass ratio of carbon black to styrene-butadiene rubber in the material of the adhesion-enhancing layer 30 is 2:1.

### Example 4

This example is substantially the same as that of Example 1, with a difference in that: in the anode electrode sheet of Example 4, a mass ratio of carbon black to styrene-butadiene rubber in the material of the adhesion-enhancing layer 30 is 3:1.

### Example 5

This example is substantially the same as that of Example 1, with a difference in that: in the anode electrode sheet of Example 5, a mass ratio of carbon black to styrene-butadiene rubber in the material of the adhesion-enhancing layer 30 is 5:1.

### Example 6

This example is substantially the same as that of Example 1, with a difference in that: in the anode electrode sheet of Example 6, the thickness T2 of the adhesion-enhancing layer 30 is 10 µm.

### Example 7

This example is substantially the same as that of Example 1, with a difference in that: in the anode electrode sheet of Example 7, the thickness T2 of the adhesion-enhancing layer 30 is 5 µm.

### Example 8

The structure of the anode electrode sheet is shown in FIG. 3 and FIG. 4.

This example is substantially the same as that of Example 1, with a difference in that: in the anode electrode sheet of Example 8, the width direction of each of the adhesion-enhancing strips 310 is parallel to the first direction, and the number of the adhesion-enhancing strips 310 is three.

### Example 9

The structure of the anode electrode sheet is shown in FIG. 7.

This example is substantially the same as that of Example 1, with a difference in that: in the anode electrode sheet of Example 9, the adhesion-enhancing strips 310 are arranged in a grid pattern, the width direction of three of the adhesion-enhancing strips 310 is parallel to the first direction, and the length direction of the other three adhesion-enhancing strips 310 is parallel to the first direction.

The projection area of the adhesion-enhancing layer 30 on the conductive current collector 10 accounts for 80% of the projection area of the electrode active layer 20 on the conductive current collector 10.

### Example 10

The structure of the anode electrode sheet is shown in FIG. 1 and FIG. 2.

This example is substantially the same as that of Example 1, with a difference in that: in the anode electrode sheet of Example 10, the adhesion-enhancing layer 30 covers the entire surface of the electrode active layer 20 facing away from the conductive current collector 10, and the number of adhesion-enhancing strips 310 is one.

The projection area of the adhesion-enhancing layer 30 on the conductive current collector 10 accounts for 100% of the projection area of the electrode active layer 20 on the conductive current collector 10.

### Example 11

The structure of the anode electrode sheet is shown in FIG. 8.

This example is substantially the same as that of Example 1, with a difference in that: in the anode electrode sheet of Example 11, the adhesion-enhancing layer 30 covers the entire surface of the electrode active layer 20 facing away from the conductive current collector 10, and the number of adhesion-enhancing strips 310 on the surface is one. Moreover, in a region corresponding to the conductive current collector 10, the adhesion-enhancing layer 30 further covers two side surfaces of the electrode active layer 20 perpendicular to the conductive current collector 10.

The thickness T3 of the adhesion-enhancing layer covering the side surfaces is 81.5 µm. The width W1 of the adhesion-enhancing layer covering the side surfaces in the direction perpendicular to the first direction X is 5 mm.

The projection area of the adhesion-enhancing layer 30 on the conductive current collector 10 accounts for 105% of the projection area of the electrode active layer 20 on the conductive current collector 10.

### Comparative Example 1

This example is substantially the same as that of Example 1, with a difference in that: the anode electrode sheet of Comparative Example 1 does not contain the adhesion-enhancing layer.

Lithium-ion batteries prepared in Example 1 to Example 11 and Comparative Example 1 are subjected to an adhesive force test and a cycle performance test, and test results are shown in Table 1 below.
(1) Adhesive force test: Testing the adhesive force between the electrode sheet and the separator of a wound and hot-pressed winding core to evaluate the adhesion effect.
(2) Cycle performance test: Performing a cycle test on the lithium-ion batteries under test conditions of 45°C, 1C/1C charge and discharge, and a voltage range of 2.5 V to 2.65 V.

**Table 1 Test Results of Adhesive Force and Cycle Performance of Lithium-ion Batteries**

| No. | Adhesive Force/ (N/m) | Capacity Retention Rate after 1000 cycles at 45°C under 1C Charge/Discharge (%) |
|---|---|---|
| Example 1 | 1.55 | 91.1 |
| Example 2 | 2.45 | 89.9 |
| Example 3 | 2.01 | 90.3 |
| Example 4 | 1.78 | 90.6 |
| Example 5 | 1.01 | 90.5 |
| Example 6 | 2.22 | 86.5 |
| Example 7 | 1.98 | 87.5 |
| Example 8 | 1.71 | 91.2 |
| Example 9 | 2.23 | 91.5 |
| Example 10 | 2.51 | 91.9 |
| Example 11 | 2.62 | 92.1 |
| Comparative Example 1 | 0 | 88.2 |

As can be seen from Table 1, a comparison between Example 1 to Example 11 and Comparative Example 1 shows that Example 1 to Example 11 can significantly enhance the adhesive force between the electrode sheet and the separator in a battery cell, and have little impact on the cycle performance of the lithium batteries.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. An electrode sheet, comprising a conductive current collector, an electrode active layer, and an adhesion-enhancing layer, wherein the electrode active layer covers a middle region of the conductive current collector in a first direction, and the adhesion-enhancing layer covers at least part of a surface of the electrode active layer facing away from the conductive current collector.

2. The electrode sheet according to claim 1, wherein the adhesion-enhancing layer covers the surface of the electrode active layer facing away from the conductive current collector, the adhesion-enhancing layer comprises an adhesion-enhancing strip, and the number of the adhesion-enhancing strips satisfies n ≥ 1.

3. The electrode sheet according to claim 2, wherein the adhesion-enhancing strip is rectangular.

4. The electrode sheet according to claim 2 or 3, wherein the number of the adhesion-enhancing strips satisfies n > 1, and the adhesion-enhancing strips are spaced apart from each other in the same direction;
a width direction of each of the adhesion-enhancing strips is parallel to the first direction; or
a length direction of each of the adhesion-enhancing strips is parallel to the first direction.

5. The electrode sheet according to claim 2 or 3, wherein the number of the adhesion-enhancing strips satisfies n > 1, the adhesion-enhancing strips are arranged in a grid pattern, a width direction of at least one adhesion-enhancing strip is parallel to the first direction, and a length direction of other adhesion-enhancing strips is parallel to the first direction.

6. The electrode sheet according to any one of claims 1 to 5, wherein a thickness of the electrode active layer is set as T1, a thickness of the adhesion-enhancing layer on the surface of the electrode active layer facing away from the conductive current collector is set as T2, where T2 < T1.

7. The electrode sheet according to claim 6, wherein 0 pm < T2 ≤ 10 µm.

8. The electrode sheet according to any one of claims 1 to 7, wherein in a region corresponding to the conductive current collector, the adhesion-enhancing layer further covers at least a side surface of the electrode active layer perpendicular to the conductive current collector.

9. The electrode sheet according to claim 8, wherein the thickness of the electrode active layer is set as T1, a thickness of the adhesion-enhancing layer covering the side surface is set as T3, where T3 ≤ (T1+10) µm; and
a width of the adhesion-enhancing layer covering the side surface in a direction perpendicular to the first direction is set as W1, where 0 mm ≤ W1 ≤ 15 mm.

10. The electrode sheet according to any one of claims 1 to 9, wherein a projection area of the adhesion-enhancing layer on the conductive current collector accounts for 5% to 110% of a projection area of the electrode active layer on the conductive current collector.

11. The electrode sheet according to any one of claims 1 to 10, wherein a material of the adhesion-enhancing layer comprises one or more of an active material, a binder, a conductive agent, or a dispersant.

12. The electrode sheet according to claim 11, wherein the material of the adhesion-enhancing layer is selected from the binder and the conductive agent.

13. The electrode sheet according to claim 12, wherein a mass ratio of the binder to the conductive agent is (10 to 50): (10 to 90).

14. A method for preparing the electrode sheet according to any one of claims 1 to 13, comprising the following steps:
coating to form an electrode active layer in a first direction on a middle region of a conductive current collector; and
coating to form an adhesion-enhancing layer on at least part of a surface of the electrode active layer facing away from the conductive current collector.

15. An electrode assembly, comprising a cathode electrode sheet, an anode electrode sheet, and a separator, the cathode electrode sheet and the anode electrode sheet being separated by the separator, and at least one of the cathode electrode sheet or the anode electrode sheet being the electrode sheet according to any one of claims 1 to 13.

16. A lithium-ion battery, comprising the electrode assembly according to claim 15.
